# EUROPEAN PATENT SPECIFICATION

(11) **EP 4 414 635 B1**
(45) Date of publication and mention of the grant of the patent: **09.07.2025**
(21) Application number: 23020352.3
(22) Date of filing: 25.07.2023
(51) Int. Cl.: F25D 16/00, F25D 17/06

(54) **MULTIFUNCTIONAL QUICK FREEZING EQUIPMENT**
MULTIFUNKTIONALE SCHNELLGEFRIERAUSRÜSTUNG
ÉQUIPEMENT DE CONGÉLATION RAPIDE MULTIFONCTIONNEL

(30) Priority: 07.02.2023 RO 202300054
(43) Date of publication of application: 14.08.2024
(73) Proprietor: Institutul National de Cercetare Dezvoltare pentru Masini si Instalatii destinate Agriculturii si Industriei Alimentare-INMA, 013813 Bucuresti (RO)
(72) Inventor: Sorica, Cristian Marian, Bucuresti (RO); Muscalu, Adriana, Bucuresti (RO); Sorica, Elena, Bucuresti (RO); Vladutoiu, Laurentiu Constantin, Popesti-Leordeni, judetul Ilfov (RO); Grigore, Andreea Iulia, Bucuresti (RO); Constantinescu, Mihai, Bucuresti (RO)
(74) Representative: Strenc, Alexandru Cristian

(56) References cited:
- EP-A1- 2 765 374
- CN-A- 115 077 166
- GB-A- 1 461 617
- JP-A- H08 338 678
- KR-A- 20050 081 728

## Description

This invention relates to a quick-freezing equipment, cabinet type, with discontinuous operation, using the method of freezing by contact with liquid nitrogen, in order to reduce the temperature of the products to the temperature of storage in a frozen state.

Use of artificial cold within the two classic methods of preservation by refrigeration and freezing, offers the guarantee of preserving the taste as close as possible to the original of perishable food products, unlike other preservation methods.

Freezing, as a method of preservation, increases the permissible storage time of food products by more than 5 to 50 times compared to preservation by refrigeration. The increase in long-lasting quality obtained by freezing is based on the effects of low temperatures of strongly slowing down or completely inhibiting the development of microorganisms, of reducing or stopping metabolic processes in the case of living products, and of reducing chemical and biochemical reactions.

According to the average linear freezing rate, *Wm,* the International Institute of Refrigeration *(Institut International du Froid - IIF)* recommends the following classification of freezing methods:

| | |
|---|---|
| - slow freezing | *Wm* = 0.5 cm/h; |
| - quick freezing | *Wm* = 0.5 to 3 cm/h; |
| - very quick-freezing | *Wm =* 3 to 10 cm/h; |
| - ultra-quick-freezing | *Wm* = 10 to 100 cm/h. |

The usual freezing of products, during which their average temperature drops below -10°C in a duration that does not allow the triggering of unwanted enzymatic and microbiological reactions, is characterized by the adoption of average linear freezing speeds of 0.1 to 0.5 cm/h and is used for products with large thicknesses, such as: meat in carcasses or blocks, butter or other fats packed in crates, etc.

Quick-frozen products are obtained at average linear freezing speeds greater than 0.5 cm/h.

The main methods of freezing food products are:
- cooled air freezing;
- freezing by contact with cold metal surfaces;
- freezing by contact with intermediate agents;
- freezing with cryogenic agents.

The *cooled air freezing* method is the most widespread due to the fact that most food products lend themselves to this type of preservation. In general, the application of the cooled air freezing method requires the existence of a closed, thermal insulated space, an air-cooling aggregate and a system of distribution of cooled air over the products.

In the case of *freezing by contact with metal surfaces*, the heat is taken from the products, by direct transfer, by the cooled surface. Surface cooling is achieved either with a vaporizing refrigerant or with an intermediate agent. Heat transfer is carried out in most cases exclusively by thermal conductivity.

*Freezing by contact with intermediate agents* consists in cooling the product by contact with a cooled intermediate agent, such as for example an aqueous solution of propylene glycol, and it is generally suitable for hermetically packaged products.

The method of *freezing by contact with cryogenic agents* consists in using the latent heat of vaporization at atmospheric pressure of some cryogenic liquids as well as the sensible heat that the formed vapours absorb by increasing their temperature from the very low level of vaporization to a level close to the temperature at which the product is frozen. The cryogenic agents used in this case are: liquid nitrogen, nitrogen oxide, carbon dioxide.

Liquid nitrogen freezing equipment can be of *discontinuous* or *continuous* operation. Those with discontinuous operation are made in the form of cabinets or freezing cells with relatively small freezing capacities of 100 to 500 kg of products per hour and are based on liquid nitrogen purging, nitrogen gas cooling or a combination thereof. Those with continuous operation are made with linear moving belt or spiral belt and can be liquid nitrogen immersion, liquid nitrogen spray or nitrogen gas cooling.

The use of liquid nitrogen for the quick freezing of food is one of the most common applications of gases in the food industry, being carried out with the aim of maintaining the qualities of the product for as long as possible, both from an organoleptic and nutritional point of view, through the quick lowering of the temperature to values lower than -18°C inside the product, so as to inhibit the activity of microorganisms.

If the decrease in temperature is achieved slowly, a progressive formation of small and large ice crystals is obtained, which can destroy the cellular structure of the product and irreparably destroy the tissues upon defrosting. If, on the contrary, these temperatures are reached quickly, crystallization can be avoided by creating an amorphous phase that favours the stability of the products during the following storage period.

The fastest method for cooling food products is to use liquid nitrogen, which comes into direct contact with the food to be frozen. Nitrogen, the main component of the atmosphere, is odourless, colourless, tasteless and inert, and has no harmful effect on food. At atmospheric pressure, liquid nitrogen is found at a temperature of -196°C, its main characteristic being the ability to absorb a large amount of heat even at lower temperature, allowing high refrigeration efficiencies and heat transfer coefficients far superior to mechanical systems.

In the case of nitrogen, 48% of the total refrigerating capacity is represented by latent heat of phase change, and the remaining 52% is represented by the sensible heat of the vapours, which, for this reason, are recirculated in the freezing room in order to make maximum use of cooling capacity.

Freezing with liquid nitrogen allows:
- reduction of dehydration losses below 0.5% of the product weight;
- avoiding the destruction of the cellular and superficial structure of food;
- keeping the superficial aspect unaltered;
- carrying out freezing and storage operations in the absence of oxygen;
- significantly reducing the investment costs of production facilities.

Cryogenic freezing equipment are produced by companies such as Linde (Germany), Praxair (USA), Octofrost (Sweden), Air Products (USA), Kelox (Spain), etc. and they are mainly of the following types:
- *Cryogenic cabinet*: is equipment designed for discontinuous operations and intended for users whose production needs do not justify the installation of continuous operation equipment. The product must be placed in trays positioned on a stainless-steel rack. An automated system regulates the introduction of nitrogen, depending on the temperature and duration of the desired cycles.
- *Linear tunnel*: consists of an insulated room in which the product is introduced with the help of a stainless-steel conveyor belt. In the pre-cooling zone, the product is covered in countercurrent, by a cold flow of nitrogen gas; in the middle zone, a first superficial freezing takes place where a partial contact occurs between the product and the liquid nitrogen which, through vaporization, takes the heat of the product causing its quick freezing. In the last zone, the temperature of the product is homogenized, being brought to the desired value in the centre of the product. The tunnel is equipped with an automated system that regulates the introduction of cryogenic fluid, so as to maintain a regulated temperature inside. In addition, a conveyor belt speed control system and a series of homogenizing fans and exhaust gas extractors are provided.
- *Spiral freezer*: is a compact equipment that allows obtaining very high production capacities occupying an extremely small space. It consists of an insulated room, in which the product is introduced by means of a loop conveyor belt, made of stainless steel, which moves in a spiral. Liquid nitrogen is introduced at the top where, by vaporization, it creates a quick-freezing zone. With the help of a ventilation system, cold gases are directed to the bottom, where they pre-cool the incoming product. The spiral freezer is equipped with an automated system for regulating the temperature and speed of the conveyor belt.
- *Immersion tunnel*: is the ideal system if the available space is limited, when a very quick freezing is required or a superficial crust is desired. The product is introduced into the tunnel using a stainless-steel conveyor belt and passes through the liquid nitrogen bath. In this way, the surface crust is formed instantly, while freezing inside requires very short times.

It is known the technical solution in the patent document GB1461617A "Refrigerator apparatus", which comprises an enclosed interior space to receive goods to be cooled, refrigerating means including evaporator, compressor and condenser, at least one duct opening into the interior space and being adapted for supplying within the interior space a refrigerating agent, a partition in the interior space dividing the interior space into a storage space for the goods to be cooled and a separated space, the evaporator being in the separated space, upper and lower passageways communicating the storage space and the separated space.

It includes also gas circulating means causing the gas in the interior space to circulate out of the storage space into the separated space through the lower passageway, upwardly through the separated space, and out of the separated space into the storage space through the upper passageway, the gas circulating means including a drive motor within the interior space, and a housing for the drive motor which is generally spaced from the drive motor so as to provide a thermal insulation gap around the drive motor. Allthough constitutes a point of reference in the area of refrigerating equipments, the said technical solution has nevertheless some limitations, in particular due to the technological level of its granting moment. Thus, from the two mentioned spaces , only the storage space functions as an useful space destined to refrigerating batches of products, the separated space -from which the vaporizer is part-, representing only a technological space , aiming at good functioning of the process. Also, irrespective of the fact that the liquid nitrogen stored in a container is taken, however only vaporized nitrogen gas is actually used at the exit from the holes made in the refrigerant distribution pipes in the freezer compartment, utilizing only the sensible heat of the vapors through recirculation with heat absorption, representing approximately 52% of its total refrigeration capacity.

Moreover, the solution in the document does not answer to a normal question on ensuring the uniformity of the quick freezing process in the implemented equipment.

Regarding the automation installation, solution makes reference to a control box having a series of switches which the operator probably operates according to his own experience, without having feedback about what is happening with true with the product subject to freezing. Cabinet-type quick freezing equipments with discontinuous operation are equally known in the state of the art, using the method of freezing by contact with liquid nitrogen, exclusively (JPS5495060A, CN206073538U, CN207797488U) or in combination with the classic method of freezing by mechanical vapour compression (JPH08296938A, US2015027141A1), which, however, has the **disadvantage** of a relatively high liquid nitrogen consumption, either due to the use of an additional amount of liquid nitrogen introduced into a heat exchanger to cool the atmosphere in the quick-freezing room, or due to liquid nitrogen purging simultaneously with the mobilization of the vapour mixture through mechanical ventilation, which leads to the entrainment of liquid nitrogen particles that have not yet reached the surface of the products subject to quick freezing to take their heat and divert their trajectory towards the side walls of the enclosure, which attracts a low efficiency of the heat absorption process and the extension of the quick freezing period, either due to the lack of a high-performance management of automatic management of the freezing process that ensures an economy of liquid nitrogen and the optimal utilization of its refrigerating capacity.

After the liquid nitrogen pre-cooling phase, to maintain the products at the freezing temperature until the temperature is uniform and the quick-freezing cycle is completed, a classic mechanical vapour compression freezing plant is used, which leads to additional energy consumption. Also, the quick freezing process can be considered non-uniform, either due to non-uniform distribution of liquid nitrogen, as a result of using uncalibrated purging devices and not paying due attention to the shape and footprint of the purged liquid nitrogen jet, or due to non-homogeneous exposure of products to the cooling medium, as a result of insufficient methods and means of homogeneous mobilization of the cooling medium.

Technical problem, solved by the invention, consists in the creation of a quick freezing equipment, cabinet type, with discontinuous operation, using the method of freezing by contact with liquid nitrogen, which ensures a low consumption of liquid nitrogen, allows the optimal utilization of its refrigerating capacity, ensures low energy consumption, improves the uniformity of the quick freezing process and increases the quality of quick frozen products.

The multifunctional quick freezing equipment, according to the invention, solves this technical problem and removes the mentioned disadvantages by using a double thermal-insulated enclosure, made by joining some polyurethane thermal insulation panels, in the form of a construction made up of two enclosures separated by a common thermal-insulating wall, respectively the quick freezing room, provided with an access door equipped with a defrost heater accompanied by a temperature sensor and a proximity sensor, and the adjacent pre-cooling and temporary frozen storage room, provided with an access door equipped with a defrost heater, which communicates between them by means of a pipe that crosses the common wall, equipped with an exhaust valve, having the role of favouring the achievement of a slight overpressure in the quick freezing room in order to avoid the rapid evacuation to the adjacent room of nitrogen vapours that have not yet been used at maximum efficiency, they being further reused for the additional cooling of the adjacent room and the reduction of the thermal load of the classic refrigerating plant that serves it, subsequently, after exhaustion, being evacuated outside the enclosure through a pipe that crosses the ceiling of the adjacent room, equipped with an exhaust valve. In this sense, both the latent heat of vaporization at atmospheric pressure of liquid nitrogen is used by purging it directly on the surface of the products, resulting in vaporization with heat absorption during the phase change, and the sensible heat of the vapours through recirculation with heat absorption, first from the quick freezing room and then from the adjacent room, making optimal use of the refrigerating capacity of liquid nitrogen and leading to the achievement of reduced energy consumption as a result of reducing the thermal load of the classic refrigerating plant serving the adjacent pre-cooling and temporary frozen storage room.

Also, the multifunctional quick freezing equipment, according to the invention, performs liquid nitrogen purging using several high-precision nozzles, having a flat distribution on the target surface and allows the homogenization of the exposure to the liquid nitrogen jets by driving in a continuous rotational movement the tray rack on which the products subject to quick freezing are positioned. In this sense, the uniformity of the quick-freezing process is improved.

At the same time, the multifunctional quick freezing equipment, according to the invention, uses an automatic control algorithm of the quick freezing process that, as long as the liquid nitrogen purging is active, the does not allow starting the mobilization of the atmosphere inside the quick freezing room by means of the mechanical ventilation plant comprising several extended shaft fan motors and same number of discharge propellers.

In this sense, by avoiding the entrainment of liquid nitrogen particles and the deviation of their trajectory towards the side walls of the enclosure, an increased efficiency of the heat absorption process and a reduction of the quick-freezing period are obtained, which leads to a reduced consumption of liquid nitrogen. Also, the automatic management algorithm of the quick freezing process has implemented a procedure that allows it to pass as quickly as possible over the phase of maximum crystallization of the aqueous solution contained in the product, i.e. as long as the temperature measured in the centre of the product is within the range of -2°C to -5°C, continuous purging of liquid nitrogen will be allowed regardless of the limitation established for the temperature of the atmosphere inside the quick freezing room. Thus, the formation of numerous small-sized ice crystals is ensured, which insignificantly degrade the structure of tissues and cell membranes, with a reduced loss of cell juice during defrosting, leading to an increase in the quality of quick-frozen products.

The multifunctional quick-freezing equipment comprises a support frame, a double insulated enclosure, a mechanical vapour ventilation plant, a liquid nitrogen supply plant, a mechanical vapour compression freezing refrigeration plant, a Dewar vessel with purge head and an automation plant.

The multifunctional quick-freezing equipment has the following advantages:
- optimally exploits the refrigerating capacity of liquid nitrogen due to the use of both the latent heat of vaporization at atmospheric pressure of liquid nitrogen and the sensible heat of the vapours;
- reduces energy consumption as a result of the reuse of cold nitrogen vapours to reduce the thermal load of the classic refrigerating plant that serves the adjacent pre-cooling and temporary frozen storage room;
- improves the uniformity of the quick-freezing process due to the homogenization of the exposure to liquid nitrogen jets and the improvement of its distribution;
- reduces the consumption of liquid nitrogen as a result of the implementation of an automatic management algorithm of the work process, which does not allow liquid nitrogen to be purged simultaneously with the mobilization of the atmosphere inside the quick-freezing room;
- increases the quality of frozen products quickly due to the implementation within the algorithm of the work process automatic management, a procedure that allows it to pass as quickly as possible over the phase of maximum crystallization of the aqueous solution contained in the product.

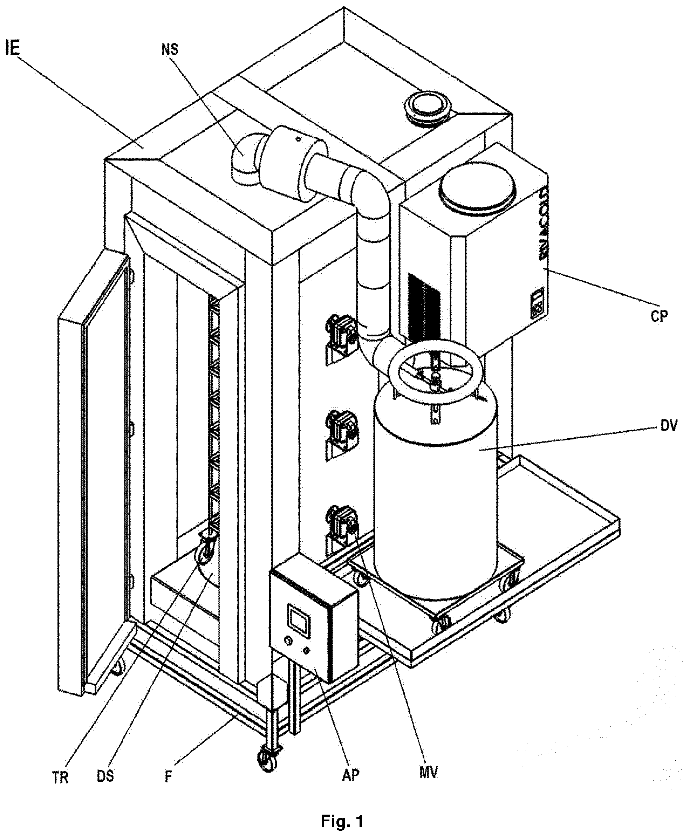

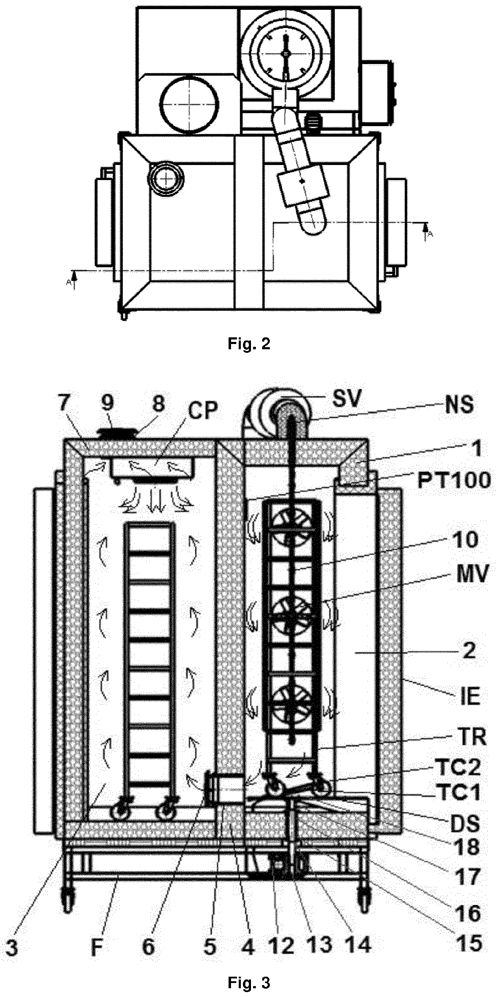

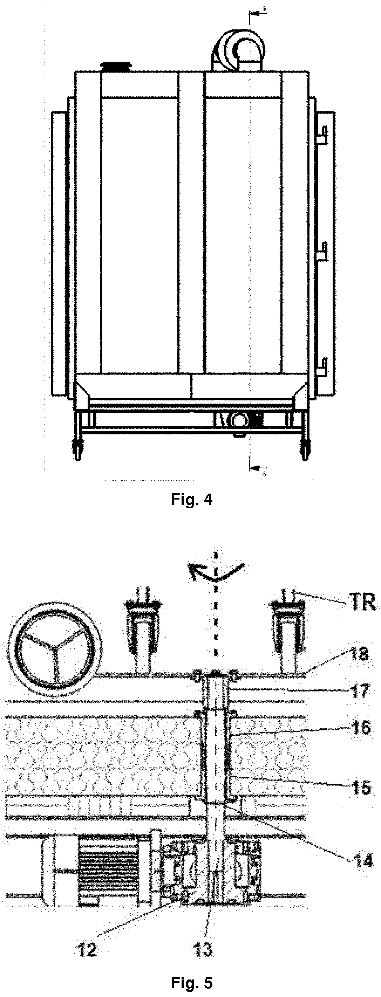

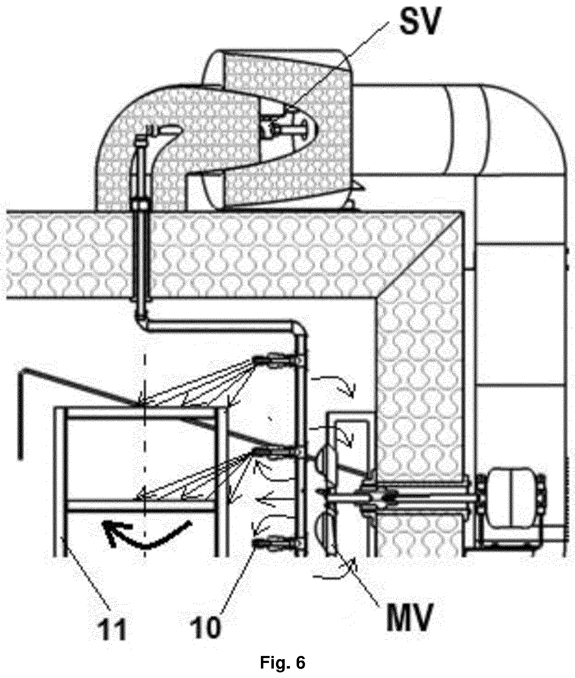

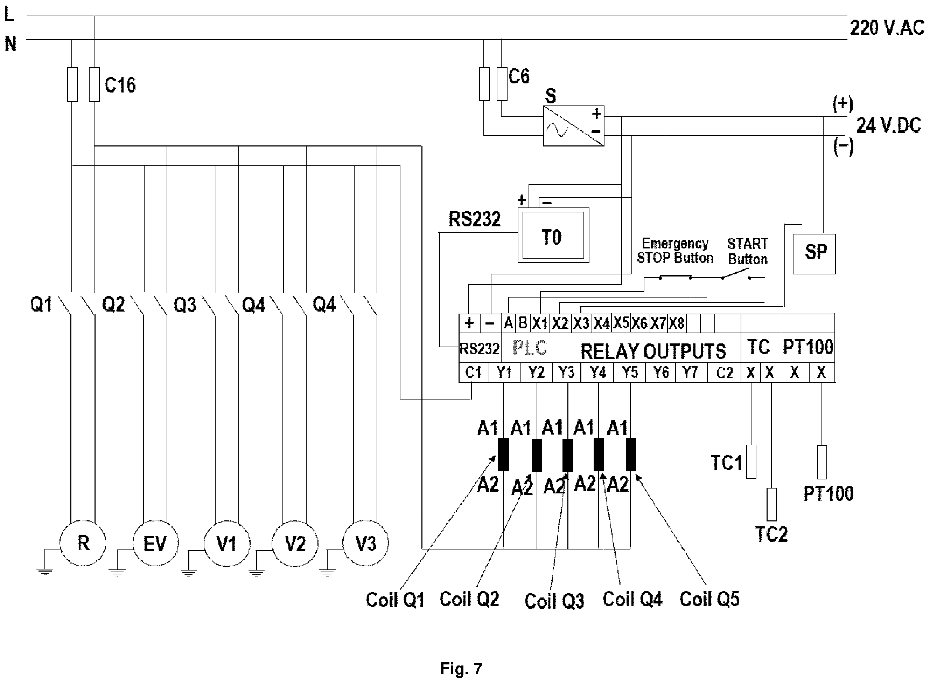

An embodiment of the invention is shown below also in connection with Figures 1-7, which represent:
- Fig.1 - Multifunctional quick-freezing equipment - main view;
- Fig.2 - Sectional route A-A - top view;
- Fig.3 - Multifunctional quick-freezing equipment - section in steps following sectional route A-A;
- Fig.4 - Sectional route B-B - lateral view-left;
- Fig.5 - Detail of the tray rack drive system - vertical section following sectional route B-B;
- Fig.6 - Detail of liquid nitrogen supply plant - vertical section following sectional route B-B;
- Fig.7 - Automation plant - General diagram of power supply and control.

The multifunctional quick freezing equipment, according to the invention, comprises a support frame (**F**), a double thermal insulated enclosure (**IE**)**,** a tray rack (**TR**), a tray rack drive system (**DS**), a mechanical vapour ventilation plant (**MV**), a liquid nitrogen supply plant (**NS**), a mechanical vapour compression freezing refrigeration plant (**CP**), a Dewar vessel (**DV**) with purge head and respectively an automation plant (**AP**).

The double thermal insulated enclosure (**IE**) is made by joining several polyurethane thermal insulation panels (**1**), in the form of a construction made up of two enclosures separated by a common thermal-insulating wall (**4**), respectively the quick freezing room (**2**) provided with an access door equipped with a defrost heater accompanied by a temperature sensor and a proximity sensor, and the adjacent pre-cooling and temporary frozen storage room (**3**), provided with an access door equipped with a defrost heater, which communicates between them by means of a pipe (**5**) that crosses the common wall (**4**), equipped with an exhaust valve (**6**), having the role of favouring the achievement of a slight overpressure in the quick freezing room (**2**) in order to avoid the rapid evacuation to the adjacent room (**3**) of nitrogen vapours that have not yet been used at maximum efficiency, they being further reused for the additional cooling of the adjacent room (**3**) and the reduction of the thermal load of the classic refrigerating plant (**CP**) that serves it, subsequently, after exhaustion, being evacuated outside the enclosure (**IE**) through a pipe (**8**) that crosses the ceiling (**7**) of the adjacent room (**3**), equipped with an exhaust valve (**9**).

For the connection to the enclosure (**IE**) of the various external sub-assemblies and the limitation of the thermal bridges, tubular elements, not positioned, made of high-density polyethylene, having mechanical and thermal characteristics compatible with the cryogenic temperatures inside, are provided.

The tray rack drive system (**DS**) comprises a speed reducer (**12**), as source of mechanical power, a shaft (**13**) for the transfer of rotational movement and torque, two tubular elements (**15**) and (**16**) for mechanical and thermal protection, assembled demountable in the passage hole made in the floor of the quick freezing room (**2**), by inserting them from the direction of each of the two opposite sides of the floor and fixing them on its surface using self-tapping screws, two wear bushings (**14**), made of PTFE, acting as a sliding bearing for the shaft (**13**), fixed in position using a shaft circlip, not positioned, a flange hub (**17**), assembled demountable on the shaft by means of a parallel wedge and axially fixed by means of a shaft circlip, not positioned, and a circular plate (**18**), assembled demountable on the hub (**17**) by means of a screw-nut assembly, which supports the tray rack (**TR**).

The liquid nitrogen supply plant (**NS**) consists of several stainless steel pipes interconnected by means of appropriate fittings, not positioned, a solenoid valve (**SV**) specially intended for cryogenic applications, several nozzles (**10**) with flat distribution, mounted via adjustable angle coupling elements, not positioned, which allow the adjustment of the direction of the cooling agent purging on the target surface, a thermal insulation on the outside, made by means of polyurethane foam shells for cryogenic applications, cased on the outside with aluminium foil, not positioned and an interior thermal insulation made using a thermal-insulating material intended for refrigerating systems, not shown and not positioned. Liquid nitrogen purging through the nozzles (**10**) with high precision and flat distribution on the target surface, leads to the improvement of the distribution of liquid nitrogen on the surface of the products, in terms of constant flow, as a measure of the volume of liquid nitrogen distributed in the unit of time, as well as in terms of the coefficient of variation of the liquid nitrogen volume distribution through the nozzles, as a measure of the homogeneous distribution of the liquid through all the nozzles.

Driving in a continuous rotation movement of the tray rack (**TR**) on which the products subject to quick freezing are positioned, in conjunction with the use of nozzles (**10**) with flat distribution on the target surface leads to the homogenization of the exposure to the liquid nitrogen jets, in terms of coverage degree of the external surfaces of the products.

The automation plant (**AP**) comprises a thermocouple type temperature sensor (**TC1**) for measuring the temperature in the centre of the product, a thermocouple type temperature sensor (**TC2**) for measuring the temperature on the surface of the product, a temperature sensor (**PT100**) thermoresistance type, for measuring the temperature in the freezing room, a 24 V DC power supply, a touchscreen operating terminal, a programmable logic controller (**PLC**) equipped with special modules for adapting signals from thermocouples, respectively thermoresistance, two bipolar fuses, a START-STOP button, an emergency stop button, several electromagnetic relays, a typified control panel, several gland-type power plugs and related electrical cables, not positioned.

As long as the liquid nitrogen purging is active, the algorithm designed for the automatic management of the quick-freezing process does not allow the mobilization of the atmosphere inside the quick freezing room (**2**) to be started by means of the mechanical ventilation plant (**MV**), which comprises several extended shaft fan motors and same number of discharge propellers, not positioned. Also, the automatic management algorithm of the quick freezing process has implemented a procedure that allows it to pass as quickly as possible over the phase of maximum crystallization of the aqueous solution contained in the product, i.e. as long as the temperature measured in the centre of the product by means of the sensor (**TC1**) is within the range -2°C to -5°C the continuous purging of liquid nitrogen will be allowed regardless of the limitation established for the temperature of the atmosphere inside the quick freezing room (**2**) measured by means of the sensor (**PT100**). Thus, numerous small-sized ice crystals are formed, which insignificantly degrade the structure of tissues and cell membranes, with a reduced loss of cell juice during defrosting, leading to an increase in the quality of quick-frozen products.

The food products (whole or chopped) are placed evenly on the trays inside the equipment, after which the temperature sensors are positioned as follows: the sensor for measuring the temperature in the centre of the product is inserted with its tip up to the thermal centre of a product; the sensor for measuring the temperature on the surface of the product is placed with the sensitive element on the external surface of a product, without being in contact with the walls of the enclosure or the trays inside. Close the access door, watch the door closed indicator and set the process parameters (limit temperature in the room and limit temperature inside the product) in the automatic working mode, using the touch screen of the command and control panel. Next, slowly open the liquid nitrogen purge valve to the end of the stroke, after which the *START* button on the command and control panel is actuated. The product status indicator that signals the end of the freeze cycle is followed. As the liquid nitrogen vaporizes, it expands in the quick-freezing room and upon reaching a slight overpressure, it will be discharged inside the frozen storage room. In this way, the equipment ensures the superior recovery of the "exhausted" refrigerant, by reusing the cold nitrogen vapours (e.g. -30°C on average, but varies according to the parameters set for the work process) discharged from the quick-freezing room. At the end of the quick-freezing cycle, press the *STOP* button, close the liquid nitrogen purge valve, switch to manual mode and press the solenoid valve opening button to release the possible volume of liquid nitrogen or vapour remaining on the section between the purge valve and the solenoid valve. The closing of the solenoid valve is actuated, after which the access door is opened, the sensors are removed from within/from the products wearing gloves with adequate thermal protection, the products are removed from the trays and the door is closed. Quick-frozen products will be able to be kept frozen inside the second thermal insulated enclosure equipped with mechanical vapour compression freezing refrigeration plant, the effect of which will be improved with the help of vapours "exhausted" during the quick-freezing cycle.

## Claims

1. Multifunctional quick freezing equipment built up by a support frame (**F**), a mechanical vapour ventilation plant (**MV**), a mechanical vapour compression freezing refrigeration plant (**CP**), a tray rack (**TR**), a Dewar vessel (**DV**) with purge head, a defrost heater equipped with a temperature sensor and a proximity sensor, a double thermal insulated enclosure (**IE**), made by joining several polyurethane thermal insulation panels (**1**), in the form of a two-room construction separated by a common thermal-insulating wall (**4**), **characterized in that** the multifunctional quick freezing equipment comprises a quick freezing room (**2**) provided with an access door equipped with the defrost heater, and an adjacent pre-cooling and temporary frozen storage room (**3**), provided with an access door equally equipped with the defrost heater, which communicate between them by means of a pipe (**5**) that crosses the common wall (**4**), equipped with an exhaust valve (**6**), having the role of favouring the achievement of a slight overpressure in the quick freezing room (**2**) in order to avoid the rapid evacuation to the adjacent room (**3**) of nitrogen vapours that have not yet been used at maximum efficiency, they being further reused for the additional cooling of the adjacent room (**3**) and the reduction of the thermal load of the mechanical vapour compression freezing refrigerating plant (**CP**) that serves it, subsequently, after exhaustion, being evacuated outside the enclosure (**IE**) through a pipe (**8**) that crosses a ceiling (**7**) of the adjacent room (**3**), equipped with an exhaust valve (**9**), a tray rack drive system (**DS**) and a liquid nitrogen supply plant (**NS**) that through a synergistic action, are configured to purge liquid nitrogen with high precision and flat distribution on a target surface and to homogenize the exposure to the liquid nitrogen jets, and respectively an automation plant (**AP**) comprising a thermocouple type temperature sensor (**TC1**) for measuring the temperature in the centre of a product, a thermocouple type temperature sensor (**TC2**) for measuring the temperature on the surface of the product, a temperature sensor (**PT100**) of thermoresistance type, for measuring the temperature in the freezing room, a 24V DC power supply, a touchscreen operating terminal, a programmable logic controller (**PLC**) equipped with special modules for adapting signals from thermocouples, respectively thermoresistance, and configured so that as long as the purging of liquid nitrogen is active the algorithm designed for the automatic management of the quick freezing process does not allow the mobilization of the atmosphere inside the quick freezing room (2) to be started by means of the mechanical ventilation plant (**MV**), which comprises several extended shaft fan motors and same number of discharge propellers, and the passage over the phase of maximum crystallization of the aqueous solution contained in the product takes place as quickly as possible, and is configured so that as long as the temperature measured in the centre of the product by means of the sensor (**TC1**) is within the range -2°C to -5°C, the continuous purging of liquid nitrogen will be allowed regardless of the limitation established for the temperature of the atmosphere inside the quick freezing room (**2**) measured by means of the sensor (**PT100**).

2. Multifunctional quick freezing equipment, according to claim 1, **characterized in that** the tray rack drive system (**DS**) comprises a speed reducer (**12**), as source of mechanical power, a shaft (**13**) for the transfer of rotational movement and torque, two tubular elements (**15**) and (**16**) for mechanical and thermal protection, two wear bushings (**14**), made of PTFE, acting as a sliding bearing for the shaft (**13**), fixed in position using a shaft circlip, a flange hub (**17**), assembled demountable on the shaft by means of a parallel wedge and axially fixed by means of a shaft circlip, and a circular plate (**18**), assembled demountable on the hub (**17**) by means of a screw-nut assembly, which supports the tray rack (**TR**) and ensures by its continuous rotation movement the uniformity of the quick freezing process.

3. Multifunctional quick freezing equipment, according to claim 1, **characterized in that** the liquid nitrogen supply plant (**NS**) consisting of several stainless steel pipes interconnected by means of appropriate fittings, a solenoid valve (**SV**) specially intended for cryogenic applications, a thermal insulation on the outside, made by means of polyurethane foam shells for cryogenic applications, cased on the outside with aluminium foil, and an interior thermal insulation made using a thermal-insulating material intended for refrigerating systems and equally including several nozzles (**10**) with flat distribution, mounted via adjustable angle coupling elements, which allow the adjustment of the direction of the cooling agent purging on the target surface.

## Patentansprüche

1. Multifunktionale Schnellgefrierausrüstung, bestehend aus einem Tragrahmen (F), einer mechanischen Dampfbelüftungsanlage (MV), einer mechanischen Dampfkompressions-Gefrierkälteanlage (CP), einem Tablettgestell (TR), einem Dewargefäß (DV) mit Spülkopf, einer Abtauheizung mit Temperatursensor und Näherungssensor, einem doppelt wärmeisolierten Gehäuse (IE), hergestellt durch die Verbindung mehrerer Polyurethan-Wärmedämmplatten (1), in Form einer Zweiraumkonstruktion, die durch eine gemeinsame wärmeisolierende Wand (4) getrennt ist, **dadurch gekennzeichnet, dass** die multifunktionale Schnellgefrierausrüstung einen Schnellgefrierraum (2) mit einer Zugangstür, die mit der Abtauheizung ausgestattet ist, und einen angrenzenden Vorkühl- und Zwischengefrierraum (3) umfasst, der mit einer Zugangstür, die ebenfalls mit der Abtauheizung ausgestattet ist, ausgestattet ist, die durch ein Rohr (5) miteinander verbunden sind, das die gemeinsame Wand (4) durchquert, das mit einem Ablassventil (6) ausgestattet ist, dessen Aufgabe es ist, das Erreichen eines leichten Überdrucks im Schnellgefrierraum (2) zu begünstigen, um die schnelle Evakuierung von noch nicht mit maximaler Effizienz genutzt und anschließend zur zusätzlichen Kühlung des angrenzenden Raumes (3) und zur Reduzierung der Wärmelast der mechanischen Dampfkompressions-Gefrier-Kälteanlage (CP), die diesen versorgt, wiederverwendet und anschließend nach Erschöpfung durch ein Rohr (8) aus dem Raum (IE) herausgeführt. die eine Decke (7) des angrenzenden Raumes (3) durchquert, ausgestattet mit einem Abluftventil (9), einem Tablett-Rack-Antriebssystem (DS) und einer Flüssigstickstoff-Versorgungsanlage (NS), die durch eine synergetische Aktion so konfiguriert sind, dass sie flüssigen Stickstoff mit hoher Präzision und flacher Verteilung auf eine Zieloberfläche spülen und die Einwirkung der Flüssigstickstoffstrahlen homogenisieren, und jeweils einer Automatisierungsanlage (AP), bestehend aus einem Thermoelement-Temperatursensor (TC1) zum Messen der Temperatur in der Mitte eines Produkts, einem Thermoelement-Temperatursensor (TC2) zum Messen der Temperatur auf der Oberfläche des Produkts, einem Temperatursensor (PT100) vom Thermowiderstandstyp zum Messen der Temperatur im Gefrierraum, einer 24-V-Gleichstromversorgung, einem Touchscreen-Bedienterminal, einer speicherprogrammierbaren Steuerung (SPS), die mit speziellen Modulen zum Anpassen von Signalen von Thermoelementen bzw. Thermowiderständen ausgestattet ist und so konfiguriert ist, dass der für die automatische Steuerung des Schnellgefrierprozesses entwickelte Algorithmus, solange die Spülung von flüssigem Stickstoff aktiv ist, nicht zulässt, dass die Mobilisierung der Atmosphäre im Schnellgefrierraum (2) gestartet wird mittels der mechanischen Belüftungsanlage (MV), die mehrere Lüftermotoren mit verlängerter Welle und die gleiche Anzahl von Auslasspropellern umfasst, und der Übergang über die Phase der maximalen Kristallisation der im Produkt enthaltenen wässrigen Lösung erfolgt so schnell wie möglich und ist so konfiguriert, dass, solange die in der Mitte des Produkts mittels des Sensors (TC1) gemessene Temperatur im Bereich von -2°C bis -5°C liegt, die kontinuierliche Spülung von flüssigem Stickstoff ungeachtet der festgelegten Begrenzung für die mittels des Sensors (PT100) gemessene Temperatur der Atmosphäre im Schnellgefrierraum (2) ermöglicht wird.

2. Multifunktionale Schnellgefrierausrüstung nach Anspruch 1, **dadurch gekennzeichnet, dass** das Antriebssystem (DS) für das Tablettgestell Folgendes umfasst: ein Untersetzungsgetriebe (12) als mechanische Antriebsquelle, eine Welle (13) zur Übertragung der Drehbewegung und des Drehmoments, zwei rohrförmige Elemente (15) und (16) zum mechanischen und thermischen Schutz, , zwei Verschleißbuchsen (14) aus PTFE, die als Gleitlager für die Welle (13) dienen und mit einem nicht positionierten Wellensicherungsring in ihrer Position fixiert sind, eine Flanschnabe (17), die abnehmbar mittels eines Parallelkeils auf der Welle montiert und axial mittels eines Wellensicherungsrings fixiert ist, und eine kreisförmige Platte (18), die abnehmbar mittels einer Schrauben-Mutter-Baugruppe auf der Nabe (17) montiert ist und das Tablettgestell (TR) trägt und sorgt durch seine kontinuierliche Rotationsbewegung für die Gleichmäßigkeit des Schnellgefrierprozesses.

3. Multifunktionale Schnellgefrierausrüstung nach Anspruch 1, **dadurch gekennzeichnet, dass** die Flüssigstickstoff-Versorgungsanlage (NS) aus mehreren Edelstahlrohren besteht, die über entsprechende, nicht positionierte Armaturen miteinander verbunden sind, einem Magnetventil (SV), das speziell für kryogene Anwendungen vorgesehen ist, , einer Wärmeisolierung an der Außenseite, die mittels Schalen aus Polyurethanschaum für kryogene Anwendungen hergestellt ist, die außen mit Aluminiumfolie ummantelt sind, und einer Wärmeisolierung an der Innenseite, die aus einem für Kühlsysteme vorgesehenen Wärmedämmmaterial hergestellt ist, und umfasst ebenfalls mehrere Düsen (10) mit flacher Verteilung, die über einstellbare Winkelkupplungselemente montiert sind, die die Einstellung der Oberflächenrichtung des Kühlmittels auf der Zieloberfläche ermöglichen.

## Revendications

1. Équipement de congélation rapide multifonctionnel constitué d'un châssis de support (F), d'une installation de ventilation mécanique de vapeur (MV), d'une installation de réfrigération de congélation à compression mécanique de vapeur (CP), d'un support à plateaux (TR), d'un vase Dewar (DV) avec tête de purge, d'un réchauffeur de dégivrage équipé d'un capteur de température et d'un capteur de proximité, d'une double enceinte thermiquement isolée (IE), réalisée par l'assemblage de plusieurs panneaux d'isolation thermique en polyuréthane (1), sous la forme d'une construction à deux chambres séparées par une paroi commune d'isolation thermique (4). **caractérisée en ce que** l'équipement de congélation rapide multifonctionnel comprend une chambre de congélation rapide (2) munie d'une porte d'accès équipée du réchauffeur de dégivrage, et une chambre adjacente de pré-refroidissement et de stockage temporaire congelé (3), munie d'une porte d'accès également équipée du réchauffeur de dégivrage, qui communiquent entre elles au moyen d'une conduite (5) traversant la paroi commune (4), équipée d'une soupape d'échappement (6), dont le rôle est de favoriser l'obtention d'une légère surpression dans la chambre de congélation rapide (2) afin d'éviter l'évacuation rapide vers la chambre adjacente (3) des vapeurs d'azote non encore utilisées a une efficacité maximale, ils sont ensuite réutilisés pour le refroidissement supplémentaire de la pièce adjacente (3) et la réduction de la charge thermique de l'installation frigorifique de congélation à compression mécanique de vapeur (CP) qui la dessert, puis, après épuisement, sont évacués à l'extérieur de l'enceinte (IE) par un tuyau (8) traversant le plafond (7) de la pièce adjacente (3), équipé d'une vanne d'échappement (9), d'un système d'entraînement de plateau (DS) et d'une installation d'alimentation en azote liquide (NS) qui, par une action synergique, sont configurés pour purger l'azote liquide avec une grande précision et une distribution plane sur une surface cible et pour homogénéiser l'exposition aux jets d'azote liquide, et respectivement d'une installation d'automatisation (AP) comprenant un capteur de température de type thermocouple (TC1) pour mesurer la température au centre d'un produit, un capteur de température de type thermocouple (TC2) pour mesurer la température à la surface du produit, un capteur de température (PT100) de type thermorésistance, pour mesurer la température dans la chambre de congélation, une alimentation 24 V CC, un terminal de commande à écran tactile, un automate programmable industriel (PLC) équipé de modules spéciaux pour adapter les signaux des thermocouples, respectivement de la thermorésistance, et configuré de telle sorte que tant que la purge d'azote liquide est active, l'algorithme conçu pour la gestion automatique du processus de surgélation ne permet pas le démarrage de la mobilisation de l'atmosphère à l'intérieur de la chambre de surgélation (2) par des moyens de l'installation de ventilation mécanique (MV), qui comprend plusieurs moteurs de ventilateur à arbre allongé et un même nombre d'hélices de refoulement, et le passage par la phase de cristallisation maximale de la solution aqueuse contenue dans le produit se produit le plus rapidement possible, et est configuré de telle sorte que tant que la température mesurée au centre du produit au moyen du capteur (TC1) est dans la plage de -2°C à -5°C la purge continue d'azote liquide sera autorisée quelle que soit la limitation établie pour la température de l'atmosphère à l'intérieur de la chambre de surgélation (2) mesurée au moyen du capteur (PT100).

2. Installation multifonctionnelle de congélation rapide, selon la revendication 1, **caractérisée en ce que** le système d'entraînement du support à plateaux (DS) comprend un réducteur de vitesse (12) comme source de puissance mécanique, un arbre (13) pour la transmission du mouvement de rotation et du couple, deux éléments tubulaires (15) et (16) de protection mécanique et thermique, , deux bagues d'usure (14), en PTFE, faisant office de palier lisse pour l'arbre (13), fixées en position par un circlip d'arbre, , un moyeu à bride (17), monté de manière démontable sur l'arbre au moyen d'une cale parallèle et fixé axialement au moyen d'un circlip d'arbre, , et une plaque circulaire (18), montée de manière démontable sur le moyeu (17) au moyen d'un ensemble vis-écrou, qui supporte le support à plateaux (TR) et assure par son mouvement de rotation continu l'uniformité du processus de congélation rapide

3. Equipement multifonctionnel de congélation rapide, selon la revendication 1, **caractérisé en ce que** l'installation d'alimentation en azote liquide (NS) constituée de plusieurs tuyaux en acier inoxydable interconnectés au moyen de raccords appropriés, non positionnés, d'une électrovanne (SV) spécialement destinée aux applications cryogéniques, , d'une isolation thermique extérieure, réalisée au moyen de coques en mousse de polyuréthane pour applications cryogéniques, enveloppées à l'extérieur d'une feuille d'aluminium, et d'une isolation thermique intérieure réalisée en utilisant un matériau thermo-isolant destiné aux systèmes de réfrigération et comprenant également plusieurs buses (10) à distribution plate, montées via des éléments de couplage à angle réglable, qui permettent le réglage de la direction de la purge de l'agent de refroidissement sur la surface cible
